# EUROPEAN PATENT APPLICATION

(11) **EP 4 831 329 A1**
(43) Date of publication of application: **28.10.2026**
(21) Application number: 24907930.2
(22) Date of filing: 09.12.2024
(51) Int. Cl.: C22C 38/02, C22C 38/06, C22C 38/04, C22C 38/00, C21D 8/12, C21D 9/46, H02K 15/02, H01F 1/147

(54) **NON-ORIENTED ELECTRICAL STEEL SHEET, MANUFACTURING METHOD THEREFOR, AND MOTOR**

(30) Priority: 20.12.2023 KR 20230187423
(71) Applicant: Hyundai Steel Company, Incheon 22525 (KR)
(72) Inventor: LEE, Dong Hee, Incheon 22525 (KR); YOO, Seong Hyeon, Incheon 22525 (KR); AHN, Yong Keun, Incheon 22525 (KR); KANG, Chun Ku, Incheon 22525 (KR)
(74) Representative: Viering, Jentschura & Partner mbB Patent- und Rechtsanwälte
(86) International application number: PCT/KR2024/020026
(87) International publication number: WO 2025/135646

(57) **Abstract**

A non-oriented electrical steel sheet, a method for manufacturing the non-oriented electrical steel sheet, and a motor, according to one embodiment of the present invention, comprise 0.1 to 1.6 wt% of silicon (Si), 0.2 to 0.4 wt% of manganese (Mn), 0.1 to 0.5 wt% of aluminum (Al), 0.003 wt% or less of carbon (C), 0.003 wt% or less of sulfur (S), 0.015 wt% or less of phosphorus (P), 0.003 wt% or less of nitrogen (N), and the balance of iron (Fe) and other inevitable impurities, wherein the orientation fraction of the final texture thereof satisfies relation 1, and thus a non-oriented electrical steel sheet with excellent magnetic properties can be provided.

## Description

### [TECHNICAL FIELD]

The present invention relates to a non-oriented electrical steel sheet, a method for manufacturing a non-oriented electrical steel sheet, and a motor.

### [BACKGROUND ART]

In accordance with ongoing global industrialization, a demand for motors and transformers is increasing and in accordance with trends in electrification and automation of various business sectors, a demand for core materials for industrial motors is continuously increasing.

As a core material of the motor, a non-oriented electrical steel sheet is used. The non-oriented electrical steel sheet plays an important role to determine an energy efficiency of a motor and requires low iron loss and high magnetic flux density characteristics. Iron loss refers to an energy loss caused during a magnetization process and a magnetic flux density refers to a force which generates power.

Since a motor installed in a vehicle rotates at a high speed of 200 Hz or higher during constant speed and high-speed driving, a focus has been on a technology and product development for low iron loss of the non-oriented electrical steel sheet. In contrast, since specifications of motors of most driving equipment used in the industry are determined by coercivity and magnetic flux density characteristic, rather than the iron loss characteristic, the coercivity and the magnetic flux density characteristics are more important.

The magnetic flux density of the non-oriented electrical steel sheet is determined by a fraction of iron (Fe) atoms in the steel and the arrangement of grains of steel. Due to magnetic anisotropy of iron atoms, the iron monatomic atom is easily magnetized in a <100> direction. Accordingly, it is necessary to uniformly generate a texture in the <100> direction over the entire plate material.

The non-oriented electrical steel sheet is manufactured through processes of steelmaking/continuous casting, hot rolling, cold rolling, cold-rolled annealing, and coating and a technique of manufacturing an electrical steel sheet having excellent magnetic property is developed by optimizing each process condition. Specifically, a general-purpose material undergoes a cold rolling process without hot-rolled annealing after hot rolling, so that it is important to uniformly generate a structure of a hot-rolled steel sheet.

### [DISCLOSURE]

### [TECHNICAL PROBLEM]

The present invention has been devised to solve the above-described problems and an object of the present invention is to provide a non-oriented electrical steel sheet having excellent magnetic property by improving the texture, a manufacturing method for the non-oriented electrical steel sheet, and also provide a motor having a high energy efficiency.

Objects of the present invention are not limited to the above-mentioned objects, and other objects, which are not mentioned above, may be clearly understood by those skilled in the art from the following descriptions.

### [TECHNICAL SOLUTION]

According to an aspect of the present invention, a non-oriented electrical steel sheet includes: 0.1 to 1.6 wt% of silicon (Si), 0.2 to 0.4 wt% of manganese (Mn), 0.1 to 0.5 wt% of aluminum (Al), 0.003 wt% or less of carbon (C), 0.003 wt% or less of sulfur (S), 0.015 wt% or less of phosphorus (P), 0.003 wt% or less of nitrogen (N), and the balance of iron (Fe) and other inevitable impurities, and an orientation fraction of the final texture satisfies Relation 1. [Relation 1] $0.1 \leq {V}_{1} / {V}_{2} \leq 0.7$

(V₁ refers to a sum of fractions of {001}<120>, {114}<481>, and {113}<251> textures and V₂ refers to a sum of fractions of {111}<112>, {334}<483>, and {223}<110> textures.

Further, the magnetic property satisfies the following Relation 2.) [Relation 2] $1.7 \leq \left[\left(ΔB/ΔH\right)*1000\right] \leq 3.0$

(ΔB refers to the change in the number of magnetic flux lines per unit area generated in the material and ΔH refers to change in intensity of the magnetic field applied through external electromagnet.)

Further, the thickness may be 1.0 mm or less.

Further, an iron loss (W_{15/50}) is 6.0 W/kg or less and a magnetic flux density (B₁) may be 0.20T or more.

According to an aspect of the present invention, a method for manufacturing a nondirectional electrical steel sheet includes a first step of preparing a steel material including 0.1 to 1.6 wt% of silicon (Si), 0.2 to 0.4 wt% of manganese (Mn), 0.1 to 0.5 wt% of aluminum (Al), 0.003 wt% or less of carbon (C), 0.003 wt% or less of sulfur (S), 0.015 wt% or less of phosphorus (P), 0.003 wt% or less of nitrogen (N), and the balance of iron (Fe) and other inevitable impurities, a second step of hot rolling the steel material to form a hot-rolled steel sheet; a third step of forming a cold-rolled steel sheet by cold rolling the hot-rolled steel sheet, and a fourth step of cold annealing the cold-rolled steel sheet.

Further, the second step may further include a reheating step of thermally treating the steel material at 1000 to 1250°C for 350 to 850 minutes.

Further, in the third step, a final thickness reduction rate is 70 to 85%.

Further, in the fourth step, the heat treatment may be performed at 800 to 1100°C.

According to an aspect of the present invention, a motor is manufactured by punching and laminating the non-oriented electrical steel sheet.

Further, the torque coefficient may be 0.210 N·m/Amp. or higher.

Further, a space factor is 93.8% or higher.

### [ADVANTAGEOUS EFFECTS]

According to an embodiment of the present invention, a non-oriented electrical steel sheet having excellent magnetic property and a manufacturing method of a non-oriented electrical steel sheet are implemented and a motor having a high energy efficiency is implemented.

The effects of the present invention are not limited to the aforementioned effects, and other effects, which are not mentioned above, will be apparently understood by a person skilled in the art from the recitations of the claims.

### [DESCRIPTION OF DRAWINGS]

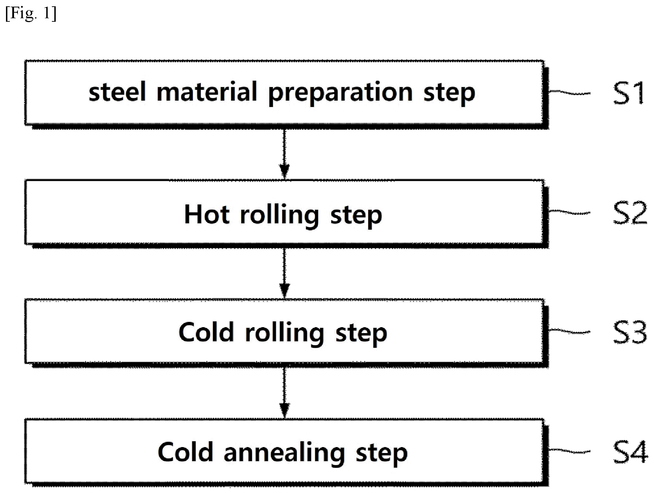

FIG. 1 is a flowchart illustrating a manufacturing method for a non-oriented electrical steel sheet according to one embodiment of the present invention.

### [BEST MODE]

Hereinafter, an exemplary embodiment of the present invention will be described in detail with reference to the accompanying drawing so that those skilled in the art may easily carry out the invention. However, the present invention is not restricted or limited by the following embodiments.

Further, when a component (or an area, a layer, or a portion) is described as being "placed on", "connected to" or "coupled to" to another component, it should be understood that it may be directly placed on/connected to/coupled to the other component, but there may be another component therebetween.

It should be understood that a term "include" or "have" indicates that a feature, a number, a step, an operation, a component, a part or a combination thereof described in the specification is present, but do not exclude a possibility of presence or addition of one or more other features, numbers, steps, operations, components, parts or combinations thereof, in advance.

In order to clearly describe the present invention, detailed descriptions of parts which are unrelated to the description or well-known related technologies which may unnecessarily obscure the gist of the present invention will be omitted. Further, when reference numerals are denoted to components of each drawing in the present specification, throughout the specification, the same or like components are denoted by the same or like reference numerals.

Further, terms or words used in the specification and the claims should not be restrictively analyzed as a general and dictionary meaning and should be analyzed as a meaning and a concept which conform to the technical spirit of the present invention based on a principle that the inventor may appropriately define a concept of a term in order to describe his/her own invention by the most method.

Unless otherwise specified, notation "A ~ B" with respect to numerical values A and B refers to A or more and B or less. In this notation, when a unit is attached only to the numerical value B, the corresponding unit is also applied to the numerical value A.

Further, unless otherwise specified, 1 ppm is 0.0001 wt%.

Hereinafter, an embodiment of the present invention will be described in detail with reference to the drawings.

### Non-oriented electrical steel sheet and motor

A non-oriented electrical steel sheet according to an embodiment of the present invention includes 0.1 to 1.6 wt% of silicon (Si), 0.2 to 0.4 wt% of manganese (Mn), 0.1 to 0.5 wt% of aluminum (Al), 0.003 wt% or less of carbon (C), 0.003 wt% or less of sulfur (S), 0.015 wt% or less of phosphorus (P), 0.003 wt% or less of nitrogen (N), and the balance of iron (Fe) and other inevitable impurities.

Hereinafter, a role and a content of an alloying element included in the non-oriented electrical steel sheet according to an embodiment of the present invention will be described in detail.

### Silicon (Si)

Silicon (Si) is a major additive element of the electrical steel sheet and lowers an eddy current loss by increasing specific resistance of steel, thereby improving a magnetic property. If the content of silicon is too small, an amount of increased specific resistance is not sufficient so that the iron loss improvement effect may not be sufficient. In contrast, if the content of silicon is excessive, brittleness of the material is increased to deteriorate cold rollability and punching property and increase a production cost. Further, the larger the content of silicon, the lower the magnetic permeability and the magnetic flux density. Accordingly, the non-oriented electrical steel sheet according to the embodiment of the present invention may include 0.1 to 1.6 wt% of silicon.

### Manganese (Mn)

Similar to silicon (Si), manganese (Mn) increases the specific resistance to lower the iron loss to improve a magnetic property and is added to improve a texture advantageous to the magnetic property. If the content of manganese is insufficient, the effect of increasing specific resistance is reduced, which may increase a high frequency iron loss.

Further, manganese is bonded with sulfur (S) in the steel to form sulfide, such as MnS. If the content of manganese is too small, sulfide is minutely precipitated to degrade the magnetism. In contrast, if an amount of added manganese is excessive, a coarse secondary phase is formed and a {111} texture disadvantageous to magnetization is formed to degrade the magnetic property. Accordingly, the non-oriented electrical steel sheet according to the embodiment of the present invention may include 0.2 to 0.4 wt% of manganese.

### Aluminum (Al)

Aluminum (Al) increases the specific resistance, along with silicon (Si) and manganese (Mn), to reduce the iron loss, thereby improving the magnetic property. Further, aluminum serves to improve rollability and reduce magnetic anisotropy to reduce the magnetic deviation. If a content of aluminum is less than 0.1 wt%, an increased amount of specific resistance is not sufficient, which may increase the high-frequency iron loss. In contrast, if a content of aluminum exceeds 0.5 wt%, nitride is excessively formed to reduce a magnetic property. Accordingly, the non-oriented electrical steel sheet according to the embodiment of the present invention may include 0.1 to 0.5 wt% of aluminum.

### Carbon (C)

Carbon (C) is bonded with titanium (Ti) or niobium (Nb) to form carbide, such as TiC or NbC, thereby increasing the iron loss. If carbon exceeds 0.003 wt%, magnetic aging is caused to deteriorate the magnetic property. Accordingly, the non-oriented electrical steel sheet according to the embodiment of the present invention may include 0.003 wt% or less of carbon.

### Sulfur (S)

Sulfur (S) is an impurity element which is inevitably contained during the manufacturing process. If a large amount of sulfur is added, brittleness is caused. Further, sulfur forms the precipitate, such as MnS, to increase iron loss and suppress the grain growth. For this reason, it is desirable to add sulfur as low as possible and in the present invention, 0.003 wt% or less of sulfur may be included.

### Phosphorus (P)

Phosphorus (P) is a grain boundary segregated element which contributes to improvement of texture to increase the specific resistance and lower the iron loss. However, if a large amount of phosphorus which exceeds 0.015 wt% is added, excessive segregated grain boundary is generated to cause suppression of grain growth, deterioration of the magnetic property, and degradation of cold rollability. Accordingly, the non-oriented electrical steel sheet according to the embodiment of the present invention may include 0.015 wt% or less of phosphorus.

### Nitrogen (N)

Nitrogen (N) is an element which contributes to the strength and corrosion resistance of steel and stabilizes austenite to improve toughness of steel. However, nitrogen of the steel is bonded with aluminum (Al) or titanium (Ti) to form precipitate, such as AlN or TiN, thereby increasing the iron loss. Further, nitrogen suppresses the grain growth so that the nitrogen is desirably added as small as possible. Accordingly, the non-oriented electrical steel sheet according to the embodiment of the present invention may include 0.003 wt% or less of nitrogen (N).

A balance other than the above-described components of steel may include Fe and inevitable impurities. The inevitable impurities are impurities mixed during a steelmaking step and a manufacturing process of a non-oriented electrical steel sheet and are widely known in the art so that a detailed description thereof will be omitted.

In the embodiment of the present invention, addition of an element other than the above-described alloying constituents is not excluded, but various elements may be included without departing from the technical spirit of the present invention. When an additional element is further included, Fe which is the balance may be replaced.

The non-oriented electrical steel sheet having the above-described alloying composition has a final texture having an orientation fraction which satisfies Relation 1 below. [Relation 1] $0.1 \leq {V}_{1} / {V}_{2} \leq 0.7$

At this time, V₁ refers to a value obtained by adding volume fractions of {001}<120>, {114}<481>, and {113}<251> orientations. The structures of {001}<120>, {114}<481>, and {113}<251> orientations are a texture advantageous to a magnetic property. As the V₁ value including the texture advantageous to the magnetic property is increased, the coercivity is reduced to improve a motor efficiency.

V₂ refers to a value obtained by adding volume fractions of {111}<112>, {334}<483>, and {223}<110> orientations. The volume fraction of {111}<112>, {334}<483>, and {223}<110> orientations is a texture disadvantageous to the magnetic property. As the V₂ value including the texture is increased, the coercivity is increased to increase hysteresis loss, which is disadvantageous to magnetization reversal.

Accordingly, if V₁/V₂ value is less than 0.1, the magnetic property may be deteriorated. The larger the value, the better the magnetic property. However, in order to allow V₁/V₂ value to exceed 0.7, a special thermal treatment process is required so that V₁/V₂ value may be limited to be 0.7 or less in consideration of the increase of the production cost caused thereby.

The fraction of the texture is measured by EBSD measurement method and a detailed measurement method will be described below.

The non-oriented electrical steel sheet according to the embodiment of the present invention has excellent magnetic property as a texture characteristic and the magnetic property satisfies Relation 2 below. [Relation 2] $1.7 \leq \left[\left(ΔB/ΔH\right)\times 1000\right] \leq 3.0$

At this time, ΔH refers to a change in the intensity of the magnetic field applied through an external electromagnet or permanent magnet and ΔB refers to a change in the number of magnetic flux lines per unit area generated in the material. Here, the material may refer to a non-oriented electrical steel sheet.

Relation 2 will be described in detail. ΔH is a change in the external magnetic field from 100 A/m to 500 A/m and the change in the number of magnetic flux lines according to the change in the external magnetic field is denoted by ΔB. At this time, a torque of a motor which starts under the same power and the rotation environment is predicted through ΔB/ΔH and ΔB/ΔH value and the motor torque value are proportional. The larger ΔB/ΔH value, the larger the motor torque is applied and the larger the motor torque value, the more efficient the operation of the device.

If ΔB/ΔH value is less than 1.7, a value of the motor torque to be expected is low so that it is difficult to efficiently operate the device. In contrast, in order to allow ΔB/ΔH value to exceed 3.0, a special processing thermal treatment process needs to be added so that there is a concern about the decrease in process economics caused thereby. Therefore, ΔB/ΔH may be limited to 3.0 or less.

A thickness of the non-oriented electrical steel sheet according to the embodiment of the present invention may be 1.0 mm or less. If the thickness of the non-oriented electrical steel sheet which is a final product exceeds 1.0 mm, the magnetic property is deteriorated so that the thickness may be controlled to be 1.0 mm or less.

The non-oriented electrical steel sheet according to the embodiment of the present invention controls a texture advantageous to the magnetic property and a texture disadvantageous to the magnetic property to have excellent magnetic property. To be more specific, due to the excellent texture characteristic, the coercivity is low, the magnetic flux density is high, the iron loss (W_{15/50}) is 6.0 W/kg or less, and the magnetic flux density (B₁) may be 0.20 T or higher.

Here, the iron loss (W_{15/50}) refers to an iron loss at 50 Hz and 1.5 T and the unit is W/kg. The magnetic flux density (B₁) refers to a magnitude of a magnetic flux density induced when a magnetic field of 100A/m is applied and Tesla (T) is used as the unit.

By doing this, the non-oriented electrical steel sheet according to the embodiment of the present invention is appropriate to be utilized as a core material for an industrial motor and has a desirable product characteristic having a low coercivity and a high magnetic flux density due to the excellent texture characteristic.

To be more specific, the motor according to the embodiment of the present invention may be produced by punching and laminating the above-described non-oriented electrical steel sheet. Further, the motor may have excellent torque coefficient and space factor. At this time, the torque coefficient of the motor may be 0.210 N·m/Amp, or higher and the space factor may be 93.85% or more.

Hereinafter, a method for manufacturing a non-oriented electrical steel sheet according to one embodiment of the present invention will be described in detail.

### Method for manufacturing non-oriented electrical steel sheet

Hereinafter, the method for manufacturing a non-oriented electrical steel sheet according to one embodiment of the present invention will be described with reference to FIG. 1.

A method for manufacturing a non-oriented electrical steel sheet, according to one embodiment of the present invention includes a first step S1 of preparing a steel material including 0.1 to 1.6 wt% of silicon (Si), 0.2 to 0.4 wt% of manganese (Mn), 0.1 to 0.5 wt% of aluminum (Al), 0.003 wt% or less of carbon (C), 0.003 wt% or less of sulfur (S), 0.015 wt% or less of phosphorus (P), 0.003 wt% or less of nitrogen (N), and the balance of iron (Fe) and other inevitable impurities, a second step S2 of forming a hot-rolled steel sheet by hot rolling the steel material, a third step S3 of forming a cold-rolled steel sheet by cold rolling the hot-rolled steel sheet, and a fourth step S4 of cold annealing the cold-rolled steel sheet.

The contents of alloying components have been described in the alloying component of the non-oriented electrical steel sheet so that a redundant description will be omitted. Further, during a manufacturing process to be described below, the contents of the alloying components is not substantially changed so that a composition of the steel material and the alloying composition of the non-oriented electrical steel sheet are substantially the same.

Hereinafter, individual steps of the method for manufacturing a non-oriented electrical steel sheet according to one embodiment of the present invention will be described in detail.

First, the first step S1 is a step of preparing a steel material having the above-described alloying composition range. To be more specific, the first step may be a step of designing the alloying constituent within the above-described alloying composition range to manufacture a half-finished product. The half-finished product may be a slab, but is not necessarily limited thereto. Further, the slab may be manufactured by a known process in the art, such as a steelmaking process or a continuous casting process.

In the method for manufacturing a non-oriented electrical steel sheet according to an embodiment of the present invention, in the second step S2, the steel material which undergoes the first step S1 is hot-rolled to form a hot-rolled steel sheet.

To be more specific, the second step S2 may include a reheating step, a hot rolling step, and a winding step.

First, the reheating step is performed prior to the hot rolling step to reheat the steel material for the subsequent process. To be more specific, in the reheating step, the steel material is charged into a heating furnace to uniformly heat the steel material to easily perform plastic deformation.

At this time, if the reheating temperature (slab reheating temperature, SRT) is lower than 1,000°C, a rolling load is increased during the hot rolling so that the rollability may be deteriorated. In contrast, if the reheating temperature exceeds 1250°C, precipitates in the half-finished product, such as carbon (C), sulfur (S), and nitrogen (N), are redissolved to form minute precipitate in a grain and a grain boundary during the cooling. This may be advantageous to improve the strength, but the grain growth is suppressed and the iron loss is deteriorated, to reduce the magnetic properties. Accordingly, in the reheating step according to the embodiment of the present invention, the reheating temperature may be 1000 to 1250°C.

Further, if the reheating time is shorter than 350 minutes, a sufficient time for the precipitate to be dissolved is not secured so that the material may be non-homogeneous. In contrast, if the reheating time exceeds 850 minutes, a production cost is increased due to heating for a long time.

Next, the hot rolling step of forming a hot-rolled steel sheet may be performed. The hot rolling step includes rough rolling and finishing rolling processes. Here, during the rough rolling process, the steel material is created as a rolled material with appropriate shape, thickness, and width and during the finishing rolling process, the steel material is adjusted to have predetermined thickness and width and may be rolled to have a satisfactory surface and shape at a correct finishing temperature.

At this time, the finishing temperature of the hot rolling step may be 850 to 1000°C. If the finishing rolling temperature is lower than 850°C, the rolling is performed in a secondary phase area to form an uneven structure. In contrast, if the finishing temperature exceeds 1000°C, there is a problem in that the strength is sharply lowered.

A thickness of the hot-rolled steel sheet on which the hot rolling step is finished may be 1.8 to 3.5 mm. If the thickness of the hot-rolled steel sheet is too thin below 1.8 mm, a thickness obtained after the cold rolling is not sufficient, which may cause a shape defect when it is applied to the product. In contrast, if the thickness of the hot-rolled steel sheet exceeds 3.5 mm, a cold rolling thickness reduction rate is increased to deteriorate the texture.

Next, the winding step may be performed. At this time, a winding temperature is desirably 550 to 750°C. If the winding temperature is lower than 550°C, a size of the grain is too small so that the grain does not sufficiently grow even after annealing and if the winding temperature exceeds 750°C, minute precipitate is generated to degrade the magnetic property.

In the method for manufacturing a non-oriented electrical steel sheet, a step of annealing a hot-rolled steel sheet is omitted. In the case of a hot-rolled steel sheet having 2 to 4 wt% of silicon, α-ferrite single phase is maintained without changing a solid-stage phase while heating from a room temperature to a melting point so that dynamic recrystallization (DRX) is not formed, thereby forming unrecrystallized grains elongated in a longitudinal direction of the steel sheet. The unrecrystallized grains have high internal residual stress and are unstable, which leads to anisotropy enhancement and plate fracture. At this time, thermal treatment is performed to accelerate the recrystallization of the unrecrystallized grains to have a uniform equiaxed structure. However, in the present invention, an unnecessary heat treatment, that is, a step of annealing a hot-rolled steel sheet is omitted to lower a production cost and increase a productivity.

Further, shot blast and a pickling process may be additionally performed between the second step S2 and the third step S3 to be described below. First, during the shot blasting, shots having a size of 2 to 1200 µm are rotated at a speed of 2000 rpm or more and the shot blasting may be performed under the high speed condition of 50 to 120 m/s. During the pickling process, pickling may be performed by supplying 18%-hydrochloric acid to a pickling tank where a reaction with an iron sheet takes place to react with residual scales which are not mechanically removed.

In the non-oriented electrical steel sheet according to an embodiment of the present invention, in the third step S3, the hot-rolled steel sheet is cold-rolled to form a cold-rolled steel sheet. The third step S3 is a process of rolling the hot-rolled steel sheet at a recrystallization temperature or lower to further reduce a thickness of the steel sheet. To be more specific, the cold rolling is a process of rolling the hot-rolled steel sheet to have a thickness and a width which satisfy the specification of the finished product.

In the third step S3, a final thickness reduction rate may be 70 to 85%. Further, a thickness of the cold-rolled steel sheet formed by cold rolling may be 1.0 mm or less, and more desirably, 0.35 to 1.0 mm.

After the third step S3, the fourth step S4 of cold annealing the cold-rolled steel sheet may be performed. The cold annealing step may be performed to soften the cold-rolled steel sheet which is hardened by the recrystallization while undergoing the cold rolling. Further, the cold annealing step may be performed at a temperature at which an optimal grain size is derived by considering the reduction of the iron loss and the mechanical property. If the cold annealing temperature is below a reference temperature, a grain size is minute, which may cause a hysteresis loss. In contrast, if the cold annealing temperature exceeds the reference temperature, the grain size becomes coarse and the eddy current loss is increased.

Accordingly, the fourth step S4 according to the embodiment of the present invention is performed by raising the temperature of the cold-rolled steel sheet to 800 to 1100°C and then maintaining for 40 to 10000 seconds, and then cooling the cold-rolled steel sheet. At this time, the temperature raising speed and the cooling speed may be 20°C/s or more.

Further, the fourth step S4 may be performed under the mixed atmosphere of nitrogen and hydrogen to suppress oxidation and nitration of a surface of the cold-rolled steel sheet. By doing this, the surface quality of the cold-rolled steel sheet may be improved.

The method for manufacturing a non-oriented electrical steel sheet according to one embodiment of the present invention may further include a coating step after the fourth step S4. The coating step may be performed to ensure the insulation property of the non-oriented electrical steel sheet and improve a punching property and means that an insulating film is formed on the surface of the cold-rolled steel sheet which undergoes the fourth step S4.

### Comparative Example and Experimental Example

Hereinafter, a configuration and an operation of the present invention will be described in more detail with reference to preferred Examples of the present invention. However, these are just illustrative for better understanding of the present invention so that the present invention is not limited thereby.

Table 1 represents a main alloying composition, a cold annealing, and a cold annealing time which configure this example, and a final thickness of a non-oriented electrical steel sheet manufactured thereby. Table 2 represents a texture orientation fraction, whether to satisfy Relations 1 and 2, a space factor, and a motor torque coefficient of Examples according to Table 1.

In this Example, a slab having an alloying composition listed in Table 1 below was heated at 1150°C and hot-rolled to manufacture a hot-rolled steel sheet having a thickness of 2.7 mm. The hot-rolled steel sheet was cold-rolled to have a final thickness described in Table 1 and then was continuously thermally treated for 3 minutes at a cold annealing temperature of Table 1, under the nitrogen atmosphere, and was coated, thereby manufacturing a non-oriented electrical steel sheet which was a finished product. Further, the non-oriented electrical steel sheet was punched and laminated to manufacture a motor.

Other alloy components which were not listed in Table 1 were controlled as control variables and were controlled under the same condition within the alloying composition range described in the non-oriented electrical steel sheet according to an embodiment of the present invention.

The texture of the present invention was measured at a 1/2t point of the plate thickness by the following method. An area ratio for a major crystal orientation obtained by interpreting a result measured by electron back scattered diffraction (EBSD) was calculated as a percentage. To be more specific, a Kikuchi pattern was measured using Hikari Super EBSD detector manufactured by AMETEK Inc. by applying an area of 10000 µm × 25000 µm and a step size of 5 µm to a cross-section perpendicular to the rolling direction including an entire thickness layer of a specimen with EBSD in which the steps did not overlap each other. The measured result was analyzed and combined using TSL-OIM software to calculate an area ratio for a major crystal orientation within an error range of 15 degrees by a percentage.

Further, the characteristic of the motor was measured as follows. The space factor of the present invention was measured based on IEC 60404-13 internal standard specification and was measured using Epstein strips. The motor torque coefficient was measured under the following test condition. A rated output was 300 W, an applied voltage was DC 48 V, a driving wave was 120°-square waveform, a stator had 178 mm of outer diameter, 75 mm of an inner diameter, and 25 mm of a height, and a rotor had 74 mm of an outer diameter, and 25 mm of height, the number of poles was 8, the number of slots was 10, a carrier frequency was 1.6 kHz, a winding method was three-phase star connection, and 4 coils per phase was included.

In the following Table, V₁ refers to a value obtained by adding volume fractions of {001}<120>, {114}<481>, and {113}<251> orientations and V₂ refers to a value obtained by adding volume fractions of {111}<112>, {334}<483>, and {223}<110> orientations.

**[Table 1]**

| Classification | Si [wt%] | Mn [wt%] | Al [wt%] | Final thickness [mm] | Cold annealing temperature [°C] |
|---|---|---|---|---|---|
| Experimental EX. 1 | 0.1 | 0.2 | 0.3 | 0.5 | 800 |
| Experimental EX. 2 | | | | | 950 |
| Experimental EX. 3 | | | | | 1100 |
| COMP. EX. 1 | 0.06 | 0.15 | - | 1.1 | 8001 |
| Experimental EX. 4 | 0.8 | 0.3 | 0.4 | 0.5 | 800 |
| Experimental EX. 5 | | | | | 950 |
| Experimental EX. 6 | | | | | 1100 |
| COMP. EX. 2 | | | | | 750 |
| Experimental EX. 7 | 1.5 | 0.25 | 0.35 | 0.5 | 800 |
| Experimental EX. 8 | | | | | 950 |
| Experimental EX. 9 | | | | | 1100 |
| COMP. EX. 3 | 2 | 0.3 | 0.45 | 1.1 | 800 |

**[Table 2]**

| Classification | Texture | | | | (ΔB/ΔH) × 1000 | Whether to satisfy [Relation 2] | Space factor [%] | Motor torque coefficient [N·m/Amp.] |
|---|---|---|---|---|---|---|---|---|
| | V₁ [%] | V₂ [%] | V₁/V₂ | Whether to satisfy [Relation 1] | | | | |
| Experimental EX. 1 | 8.1 | 46.7 | 0.17 | O | 2.475 | O | 94.1 | 0.241 |
| Experimental EX. 2 | 8.5 | 43.3 | 0.21 | O | 2.7 | O | 94.6 | 0.261 |
| Experimental EX. 3 | 8.6 | 45.2 | 0.19 | O | 2.575 | O | 93.8 | 0.247 |
| COMP. EX. 1 | 1.6 | 78.4 | 0.02 | X | 1.675 | X | 85.3 | 0.189 |
| Experimental EX. 4 | 12.1 | 34.6 | 0.34 | O | 2.4 | O | 95.9 | 0.24 |
| Experimental EX. 5 | 11.8 | 33 | 0.36 | O | 2.175 | O | 96.1 | 0.225 |
| Experimental EX. 6 | 10.4 | 35.5 | 0.29 | O | 2.25 | O | 94.7 | 0.238 |
| COMP. EX. 2 | 5.6 | 60.8 | 0.09 | X | 1.7 | O | 93.5 | 0.206 |
| Experimental EX. 7 | 13.3 | 33.2 | 0.4 | O | 2.275 | O | 96.3 | 0.233 |
| Experimental EX. 8 | 15.1 | 30.7 | 0.49 | O | 2.075 | O | 95.2 | 0.219 |
| Experimental EX. 9 | 14.5 | 31.2 | 0.46 | O | 2.15 | O | 96.6 | 0.223 |
| COMP. EX. 3 | 3.2 | 56.1 | 0.05 | X | 1.725 | X | 84.4 | 0.175 |

As represented in Tables 1 and 2, Experimental Examples 1 to 9 according to an embodiment of the present invention satisfy Relation 1 and the magnetic property satisfies Relation 2. Further, in Experimental Examples 1 to 9, V₁ value which is a sum of textures advantageous to the magnetic property is higher than that of Comparative Example and V₂ value which is a sum of textures disadvantageous to the magnetic property is lower than that of Comparative Example. Accordingly, excellent magnetic property in accordance with the improvement of the texture will be expected.

Further, Experimental Examples 1 to 9 have excellent textures and magnetic properties so that it is confirmed that the space factor and the motor torque coefficient of the motor manufactured as Experimental Examples are better than those of Comparative Example.

In contrast, Comparative Examples 1 to 3 do not satisfy Relations 1 and 2. Further, as compared with Experimental Examples, V₁ value which is a sum of textures advantageous to the magnetic property is low and V₂ value which is a sum of textures disadvantageous to the magnetic property is high.

It is further confirmed that the space factor and the motor torque coefficient of the motor manufactured as Comparative Examples 1 to 3 are lower than those of Experimental Examples.

As described above, the embodiments of the present invention have been described and it is obvious to those skilled in the art that the present invention may be embodied in other specific forms other than the above-described embodiment, without departing from the spirit or scope of the present invention. Therefore, it should be understood that the above-described embodiment is not restrictive, but is illustrative and thus the present invention is not limited to the above description but may be modified within the scope of the accompanying claims and the equivalent range.

## Claims

1. A non-oriented electrical steel sheet comprising: 0.1 to 1.6 wt% of silicon (Si), 0.2 to 0.4 wt% of manganese (Mn), 0.1 to 0.5 wt% of aluminum (Al), 0.003 wt% or less of carbon (C), 0.003 wt% or less of sulfur (S), 0.015 wt% or less of phosphorus (P), 0.003 wt% or less of nitrogen (N), and the balance of iron (Fe) and other inevitable impurities,
wherein the orientation fraction of the final texture satisfies relation 1. $0.1 \leq {V}_{1} / {V}_{2} \leq 0.7$ [Equation 1
(V₁ refers to a sum of fractions of {001}<120>, {114}<481>, and {113}<251> textures and V₂ refers to a sum of fractions of {111}<112>, {334}<483>, and {223}<110> textures.)

2. The non-oriented electrical steel sheet of claim 1, wherein the magnetic property satisfies Relation 2 below. [Relation 2] $1.7 \leq \left[\left(ΔB/ΔH\right)\times 1000\right] \leq 3.0$ (ΔB refers to the change in the number of magnetic flux lines per unit area generated in the material and ΔH refers to change in intensity of the magnetic field applied through external electromagnet.)

3. The non-oriented electrical steel sheet of claim 1, wherein the thickness is 1.0 mm or less.

4. The non-oriented electrical steel sheet of claim 1, wherein an iron loss (W_{15/50}) is 6.0 W/kg or less and a magnetic flux density (B₁) is 0.20T or more.

5. A method for manufacturing a non-oriented electrical steel sheet, comprising:
a first step of preparing a steel material including 0.1 to 1.6 wt% of silicon (Si), 0.2 to 0.4 wt% of manganese (Mn), 0.1 to 0.5 wt% of aluminum (Al), 0.003 wt% or less of carbon (C), 0.003 wt% or less of sulfur (S), 0.015 wt% or less of phosphorus (P), 0.003 wt% or less of nitrogen (N), and the balance of iron (Fe) and other inevitable impurities,
a second step of hot rolling the steel material to form a hot-rolled steel sheet;
a third step of forming a cold-rolled steel sheet by cold rolling the hot-rolled steel sheet, and
a fourth step of cold annealing the cold-rolled steel sheet.

6. The method for manufacturing a non-oriented electrical steel sheet of claim 5, wherein the second step further includes a reheating step of thermally treating the steel material at 1000 to 1250°C for 350 to 850 minutes.

7. The method for manufacturing a non-oriented electrical steel sheet of claim 5, wherein in the third step, a final thickness reduction rate is 70 to 85%.

8. The method for manufacturing a non-oriented electrical steel sheet of claim 5, wherein in the fourth step, thermal treatment is performed at 800 to 1100°C.

9. A motor manufactured by punching and laminating a non-oriented electrical steel sheet of claim 1.

10. The motor of claim 8, wherein a torque coefficient is 0.210 N·m/Amp. or higher.

11. The motor of claim 8, wherein a space factor is 93.8% or higher.
